# EUROPÄISCHE PATENTSCHRIFT

(11) **EP 0 995 583 B1**
(45) Veröffentlichungstag und Bekanntmachung des Hinweises auf die Patenterteilung: **12.05.2004**
(21) Anmeldenummer: 99117323.8
(22) Anmeldetag: 03.09.1999
(51) Int. Cl.: B29C 51/44, B29C 51/46, B65G 57/16, B29C 51/26

(54) **Thermoformmaschine**
Thermoforming machine
Machine de thermoformage

(30) Priorität: 22.10.1998 DE 29818791 U
(43) Veröffentlichungstag der Anmeldung: 26.04.2000
(73) Patentinhaber: Gabler Maschinenbau GmbH, D-23568 Lübeck (DE)
(72) Erfinder: Rowedder, Axel, 23623 Ahrensbök (DE)
(74) Vertreter: Valentin, Ekkehard, Dipl.-Ing.

(56) Entgegenhaltungen:
- DE-A- 2 648 563
- DE-A- 3 346 628
- DE-U- 29 802 318
- US-A- 4 676 938

## Beschreibung

Die Erfindung betrifft eine Thermoformmaschine mit einer speicherprogrammierbaren Steuerung zum Formen und Stanzen von tiefgezogenen, beliebigen becheroder deckelartigen Artikeln aus thermoplastischem, über einen intermittierenen Folientransport zugeführtem Kunststoff oder dergleichen, umfassend ein mit mehreren über- bzw. nebeneinander liegenden Artikelreihen ausgebildetes Mehrfach-Form- und Stanzwerkzeug, bestehend aus einem Oberwerkzeug und einem zum Abstapeln der Fertigartikel ausschwenkbaren Unterwerkzeug, dem in einer nachgeschalteten automatischen Stapel- und Zählvorrichtung eine die nach dem Schwenken des Maschinentisches bzw. des Unterwerkzeuges aus der Maschine ausgestoßenen Artikel in komplementären Ausformungen zu Artikelstangen zusammenführende, verfahrbare Fangplatte zugeordnet ist, aus der beim Erreichen der vorgewählten Stückzahl die Artikelstangen in einer maschinenentfemten Übergabeposition auf einen Stapelkorb übergeleitet und von dort entnommen werden, wobei dem Stapelkorb für die in einer Reihe nebeneinander liegenden Artikelstangen eine Abschiebereinheit zugeordnet ist. Eine solche Thermoformmaschine ist durch die DE 298 02 318 U bekanntgeworden.

Bei einer aus der DE 33 46 628 C2 bekannten Thermoformmaschine dieser Art werden zwischen den relativ aufeinanderzu- bzw. voneinanderwegbewegten Werkzeugen Kunststoffartikel wie Margarineschalen, Trinkbecher, Behälterdeckel, Trays usw. aus thermoplastischen Kunststoff-Folien und Verbundfolien hergestellt. Hierbei werden in der geschlossenen Stellung von Ober- und Unterwerkzeug die Artikel geformt, dann gestanzt und bei geöffneter Stellung aus dem Werkzeug heraus in eine nachgeschaltete Stapel- und Zähleinrichtung transportiert. Das Oberteil bzw.-werkzeug der Thermoformmaschine ist an einer starren Querbrücke montiert, während das Unterteil bzw. -werkzeug auf einem höhenbeweglichen und schwenkbaren Formtisch befestigt ist. Zur Schwenkbarkeit des Formtisches besitzt dieser Lagerzapfen, deren Lager in je einem vertikal geführten Führungsstück angeordnet sind. Zum Antrieb dienen Kniehebel, die mit Kurvenrollen den auf einer Hauptwelle befestigten Kurvenscheiben anliegen.

Damit die Artikel beim Abstapeln nicht gegen Störkanten geraten, wie beispielsweise im Bereich des Folientransportes, ist für das ausschwenkbare Unterwerkzeug ein großer Schwenkwinkel von etwa 45 bis 90°, typischerweise von 80°, erforderlich. Die in der ausgeschwenkten Werkzeug-Endlage aus der Maschine ausgestoßenen Fertigartikel werden von einer dem gekippten Werkzeug entgegenfahrenden bzw. dem Werkzeug zugestellten Fangplatte aufgenommen, um ein reproduzierbares Einstapeln zu ermöglichen. Sobald die Fangplatte die Artikelstangen mit der vorgewählten Stückzahl aufgenommen hat, werden die Artikelstangen in einer maschinenentfemten Position auf einen Stapelkorb zum Ab- bzw. Weitertransport übergeben. Aus dem Stapelkorb werden die gesamten über- bzw. nebeneinander liegenden Artikelstangen gleichzeitig, ohne Vereinzelung auf beispielsweise ein Transportband abgegeben.

Eine aus der DE-Zeitschrift "Kunststoffe 88, (1998) 2, Seiten 158 bis 161 bekannte Thermoformmaschine der eingangs genannten Art sieht vor, daß die dort geformten Becher von einer Saugerplatte übernommen und in Zentrierpaletten gestapelt werden. Zuvor ist das Unterwerkzeug nach dem Formvorgang um 80° zur Foliendurchlaufrichtung, d.h. in die ideale Übergabeposition der Becher in die Stapeleinrichtung gekippt worden. Das Ansaugen der Artikel macht allerdings den Auswerfer komplizierter und die Einheit bedingt durch die benötigte Vakuumanlage aufwendiger. Eine Vereinzelung der Fertigartikel ist nur sehr schwer und wenn überhaupt nur aufwendig zu erreichen.

Aus der DE 26 48 563 A ist eine Thermoformmaschine mit einer Vorrichtung zum Stapeln von flachen Tiefziehteilen bekannt, bei der durch fortwährendes Hochfahren eines Auswerferstempels auf einer höhenbeweglichen Stapelplatte allmählich ein Vorstapel oder mehrere nebeneinander liegende Vorstapel gebildet wird bzw. werden. Sobald ein Fertigstapel durch einen Aufwärtshub der Stapelplatte in die Entnahmeebene gelangt ist, betätigt in der oberen Endstellung die Stapelplatte einen Endschalter, welcher wiederum einen Druckmittelzylinder steuert. Dieser wirkt auf einen Schieber ein, der sich innerhalb des Gehäuses befindet und den Fertigstapel auf seiner ganzen Höhe erfaßt. Durch den Druckmittelzylinder wird der Schieber in horizontaler Richtung verschoben, so daß er den Fertigstapel mitnimmt und auf die Entnahmeebene der Entnahmevorrichtung schiebt. Dabei trifft der Schieber auf einen Endschalter, welcher über den Druckmittelzylinder die Rückfahrbewegung des Schiebers auslöst. Sobald der Schieber in seine Ausgangslage zurückgekehrt ist, betätigt er einen Endschalter der auf den Druckmittelzylinder wirkt. Dieser löst sodann eine Rückstellbewegung für die bewegliche Stapelplatte aus, so daß diese wieder in ihre untere Endlage zurückkehrt und damit zur Bildung eines weiteren Fertigstapels von Tiefziehteilen bereit ist.

Der Erfindung liegt die Aufgabe zugrunde, eine gattungsgemäße Thermoformmaschine so zu gestalten, daß auf einfache Weise eine Vereinzelung der Artikelstangen bei der Übernahme aus dem Stapelkorb möglich ist.

Diese Aufgabe wird erfindungsgemäß mit den im kennzeichnenden Teil des unabhängigen Anspruchs angegebenen Merkmalen gelöst. Es läßt sich damit erreichen, daß nur immer die Artikelstangen einer Reihe ausgeschoben werden und damit gezielt eine Lage der im Abstand nebeneinander liegenden Artikelstangen vereinzelt von den übrigen Lagen aus dem Stapelkorb auf vorzugsweise einen nachgeschalteten Abförderer abgelegt wird. Durch sukzessives Absenken des Stapelkorbes mit einem jeweils dem Höhenabstand zwischen übereinander liegenden Reihen von Artikelstangen entsprechenden Senkhub läßt sich der Stapelkorb lagenweise leeren. Die genaue Abschiebeposition wird dabei von den Endlagenschaltem überwacht und im Zusammenspiel mit der übergeordneten Maschinensteuerung schrittweise angefahren.

Eine Ausgestaltung der Erfindung sieht vor, daß die Abschiebereinheit mit einer Zahl der in einer Reihe vorhandenen Artikelstangen entsprechenden Zahl von Abschieberstäben ausgebildet ist. Die somit kammartige Abschiebereinheit kann mit ihren einzelnen Abschieberstäben in die - anders als z.B. bei einer Auflageplatte - vorteilhaft die Artikelstangen selektivierenden, einer jeden Artikelstange zugehörigen Ausformungen bzw. der Artikelgeometrie angepaßten Durchbrechungen des Stapelkorbes eintreten und die Artikelstangen ab- bzw. ausschieben.

Wenn vorteilhaft ein hinter der Stapel- und Zählvorrichtung angeordneter Abförderer die abgeschobenen Artikelstangen schrittweise weitertaktet, lassen sich die Artikelstangen lagenweise im ausreichenden Abstand voneinander auf beispielsweise ein Transportband mit genauer Vereinzelung der Artikelstangen, was die nachfolgende automatische Weiterverarbeitung begünstigt, abfördem.

Weitere Merkmale und Vorteile der Erfindung ergeben sich aus den Ansprüchen und der nachfolgenden Beschreibung, in der ein Ausführungsbeispiel des Gegenstandes der Erfindung anhand der einzigen Zeichnungsfigur näher erläutert ist. Die Figur zeigt in schematischer Darstellung die Seitenansicht einer Thermoformmaschine mit nachgeschalteter Stapel- und Zählvorrichtung für in diesem Ausführungsbeispiel abzustapelnde Becher.

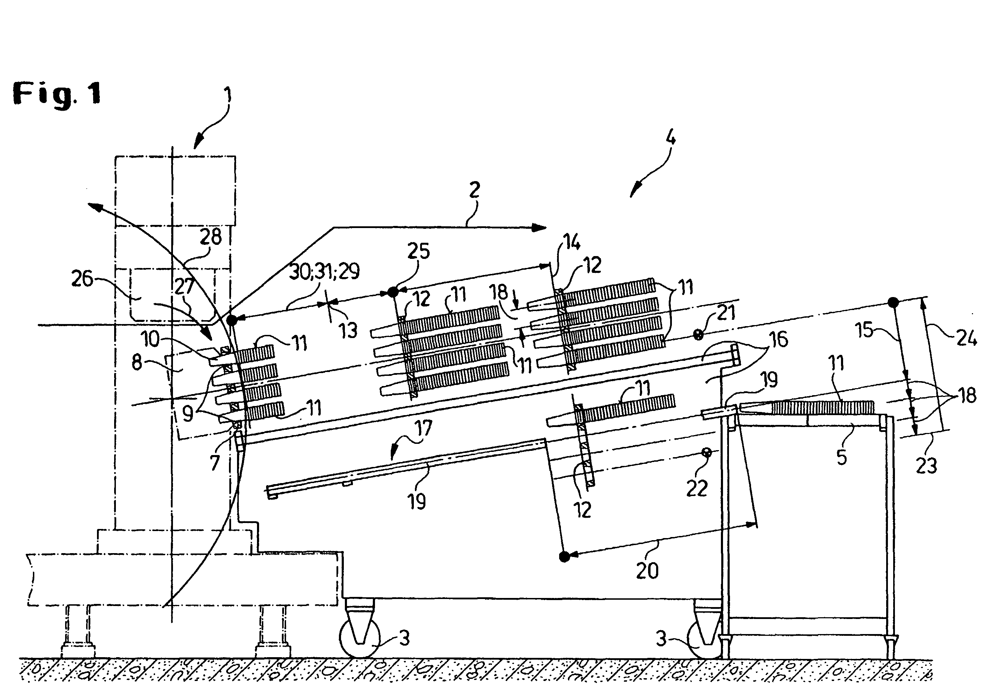

Einer Thermoformmaschine 1 wird gemäß Fig. 1 von einer Seite her ein Kunststoff-Folienband 2 einlaufseitig zugeführt und auslaufseitig gemäß Pfeil auf einer nicht dargestellten Wickelrolle wieder aufgewickelt. Der Thermoformmaschine 1 ist eine auf Rädern 3 verfahrbare, automatische Stapel- und Zählvorrichtung 4 sowie dieser ein Transportband 5 nachgeschaltet. Die Stapel- und Zählvorrichtung 4 umfaßt eine verfahrbare Fangplatte 7, die entsprechend der Anzahl der in dem Unterwerkzeug 8 der Thermoformmaschine 1 in über- und nebeneinanderliegenden Reihen vorgesehenen Formnester eine entsprechende Zahl von Ausformungen bzw. -nehmungen 9 aufweist, in die die Fertigartikel 10 von - nicht dargestellten - Ausstoßern der Thermoformmaschine 1 eingebracht und dort zu Artikelstangen 11 mit einer durch die speicherprogrammierbare Steuerung (nicht gezeigt) der Thermoformmaschine 1 vorgegebenen Anzahl von Fertigartikeln 10 ineinandergestapelt werden. Die Stapelund Zählvorrichtung 4 weist weiterhin einen Stapelkorb 12 auf, der die Artikelstangen 11 von der Fangplatte 7 übernimmt und aus dem die Artikelstangen 11 auf das Transportband 5 abgegeben werden, beispielsweise um einem weiteren Barbeitungsvorgang wie einer Bedruckmaschine oder einem Bördelaggregat zugeführt zu werden.

Der Stapelkorb 12 ist zur Abnahme der Artikelstangen 11 in Richtung auf die Fangplatte 7 bis zu einer Übergabeposition 13 verfahrbar und nach der Abnahme der Artikelstangen 11 in eine von der Fangplatte 7 entfernte Entladestation 14 verfahrbar. Der Stapelkorb 12 kann aus dieser Position heraus taktweise abgesenkt werden, und zwar zunächst mit einem großen Senkhub 15 so weit, bis die untere Reihe der Artikelstangen 11 in Flucht mit einer in dem Traggestell 16 der Stapel- und Zählvorrichtung 4 angeordneten Abschiebereinheit 17 liegt, und danach jeweils mit einem dem Höhenmaß 18 der übereinanderliegenden Reihen von Artikelstangen 11 entsprechenden Hub. Die Abschiebereinheit 17, die für jede Artikelstange 11 einen Abschieberstab 19 besitzt und in Richtung des Doppelpfeiles 20 hin und her bewegbar ist, schiebt die in Teilhüben sukzessive abgesenkten Artikelstangen lagenweise auf das Transportband 5 über. Nach jedem Abschiebevorgang wird das Transportband so weit verfahren, daß die Artikelstangen der nächstfolgenden Artikelreihe des Stapelkorbes 12 abgeschoben werden können, so daß eine Artikelstangen-Vereinzelung im gleichbleibenden Abstand gewährleistet ist. Das Absenken des Stapelkorbes 12 wird von zwei Endlagenschaltem 21 bzw. 22 überwacht. Sobald der letzte Abschiebevorgang beendet ist, wird der entleerte Stapelkorb 12 aus seiner untersten Endstellung 23 gemäß Pfeil 24 in die obere Endlage angehoben und anschließend in die Ausgangsposition 25 verfahren, aus der heraus er dann zur Abnahme von während der Zeit des Abschiebens der Artikelstangen in die Fangplatte 7 eingestapelten neuen Fertigartikel 10 in die Übergabeposition 13 verstellt wird.

Die Fangplatte 7 nimmt nämlich ununterbrochen neue Fertigartikel (Becher) 10 auf, die aus dem auf seinem Weg zu der neben dem Unterwerkzeug 8 auch ein Oberwerkzeug 26 sowie eine nicht gezeigte Heizstation der Thermoformmaschine 1 durchlaufenden Folienband 2 hergestellt werden. Denn sobald ein der Anzahl der in dem Unterwerkzeug 4 vorgesehenen Formnester entsprechender Abschnitt des Folienbandes zwischen Ober- und Unterwerkzeug 26 bzw. 8 eingelaufen ist, werden bei geschlossenen Werkzeugen die Artikel ausgeformt und -gestanzt. Sobald die Artikel 10 fertiggestellt sind, wird das Unterwerkzeug 8 in Pfeilrichtung 27 in die in Fig. 1 unten gezeigte Auswurfstellung verschwenkt. Das Unterwerkzeug 8 bestreicht beim Kippen bzw. Ausschwenken einen schematisch als Störradius 28 in Fig. 1 eingezeichneten Bereich, der nämlich während der Schwenkbewegung des Unterwerkzeuges 8 von der Fangplatte 7 nicht gestört werden darf, d.h. frei bleiben muß. Die Fangplatte 7 wird daher synchron mit dem Schwenken des Unterwerkzeuges 8 von diesem weggefahren bzw. dem gekippten Werkzeug zugestellt. Dies wird mit einer stets gleichen, kein Auseinanderziehen der in die Fangplatte schon ineinandergestapelten Fertigartikel 10 bewirkenden Verfahrdynamik erreicht, indem der Verfahrweg 29 der Fangplatte 7 über den für den Störradius 28 des Schwenkweges des Unterwerkzeugs 8 eigentlich benötigten Verfahrweg 30 hinaus verlängert ist und noch durch eine zweite, zusätzliche Wegstrecke 31 ergänzt wird.

## Patentansprüche

1. Thermoformmaschine (1) mit einer speicherprogrammierbaren Steuerung zum Formen und Stanzen von tiefgezogenen, beliebigen becher- oder dekkelartigen Artikeln (10) aus thermoplastischem, über einen intermittierenden Folientransport zugeführtem Kunststoff oder dergleichen, umfassend ein mit mehreren über- bzw. nebeneinander liegenden Artikelreihen ausgebildetes Mehrfach-Form- und Stanzwerkzeug, bestehend aus einem Oberwerkzeug und einem zum Abstapeln der Fertigartikel ausschwenkbaren Unterwerkzeug (8), dem in einer nachgeschalteten automatischen Stapel- und Zählvorrichtung (4) eine die nach dem Schwenken des Maschinentisches bzw. des Unterwerkzeuges (8) aus der Maschine ausgestoßenen Artikel (10) in komplementären Ausformungen (9) zu Artikelstangen (11) zusammenführende, verfahrbare Fangplatte (7) zugeordnet ist, aus der beim Erreichen der vorgewählten Stückzahl die Artikelstangen (11) in einer maschinenentfemten Übergabeposition (13) auf einen Stapelkorb (12) übergeleitet und von dort weitergeleitet werden, wobei dem Stapelkorb (12) für die in einer Reihe nebeneinander liegenden Artikelstangen (11) eine Abschiebereinheit (17) zugeordnet ist,
**dadurch gekennzeichnet,**
**daß** der Stapelkorb (12) von Endlagenschaltern (21, 22) überwacht hebund senkbar ist und daß durch schrittweises Absenken des Stapelkorbes (12) mit einem jeweils den Höhenabstand zwischen den übereinander liegend eingestapelten Reihen von Artikelstangen (11) entsprechenden Senkhub der Stapelkorb (12) sukzessive lagenweise durch die Abschiebeeinheit (17) leerbar ist.

2. Thermoformmaschine nach Anspruch 1,
**dadurch gekennzeichnet,**
**daß** die Abschiebereinheit (17) mit einer der Zahl der in einer Reihe vorhandenen Artikelstangen (11) entsprechenden Zahl von Abschieberstäben (19) ausgebildet ist.

3. Thermoformmaschine nach Anspruch 1 oder 2,
**dadurch gekennzeichnet,**
**daß** ein hinter der Stapel- und Zählvorrichtung (4) angeordneter Abförderer (5) die abgeschobenen Artikelstangen (11) schrittweise weitertaktet.

## Claims

1. A thermoforming machine (1) with a programmable control for the forming and punching of deep-drawn, optional cup- or cap-shaped articles (10) made of thermoplastic plastic material or suchlike fed by means of an intermittent film transport, comprising a multiple forming and punching tool designed with several rows of articles lying above or beside one another, consisting of an upper tool and a lower tool (8) capable of swivelling out for the stacking of the finished articles, to which lower tool there is assigned, in a downstream automatic stacking and counting device (4), a traversable catch plate (7) which brings together the articles (10), ejected from the machine after the swivelling of the machine table or the lower tool (8), to form article poles (11) in complementary recesses (9), from which catch plate the article poles (11) are transferred, upon reaching a preselected number of pieces, to a stacking basket (12) in a transfer station (13) remote from the machine and are conveyed onwards therefrom, whereby a push-off unit (17) is assigned to the stacking basket (12) for the article poles (11) lying beside one another in a row,
**characterised in that**
the stacking basket (12), monitored by limit switches (21, 22), can be raised and lowered and that, by stepwise lowering of the stacking basket (12) with a lowering stroke corresponding respectively to the height distance between the rows of article poles (11) stacked lying one above the other, the stacking basket (12) can be emptied successively in layers by means of the push-off unit (17).

2. The thermoforming machine according to claim 1,
**characterised in that**
the push-off unit (17) is designed with a number of push-off rods (19) corresponding to the number of article poles (11) present in a row.

3. The thermoforming machine according to claim 1 or 2,
**characterised in that**
a conveyor (5) arranged behind the stacking and counting device (4) continues to cycle in steps the pushed-off article poles (11).

## Revendications

1. Machine pour thermoformage (1) avec une commande par programme enregistré pour former et estamper des articles (10) emboutis quelconques, du type coupe ou couvercle, à partir d'une matière thermoplastique ou analogue apportée par un transport à ruban intermittent, comprenant un outil multiple de formage et d'estampage conçu avec plusieurs rangées superposées ou juxtaposées d'articles et constitué d'un outil supérieur et d'un outil inférieur (8) qui est orientable pour décharger les articles finis et auquel est associée, dans un dispositif d'empilage et de comptage (4) automatique placé en aval, une plaque de préhension (7) déplaçable qui rassemble les articles (10) éjectés de la machine après le pivotement de la table de machine ou de l'outil inférieur (8) dans des formes complémentaires (9) pour former des piles d'articles (11) et à partir de laquelle, lorsque le nombre présélectionné de pièces est atteint, les piles d'articles (11) sont transférées dans une position de transfert (13) distante de la machine sur un panier d'empilage (12) et sont transportées plus loin à partir de là, une unité pousseuse (17) étant associée au panier d'empilage (12) pour les piles d'articles (11) placées les unes à côté des autres dans une rangée,
**caractérisée en ce que** le panier d'empilage (12) peut être levé et baissé sous la surveillance d'interrupteurs de fin de course (21, 22) et **en ce que**, par un abaissement pas à pas du panier d'empilage (12) avec une course d'abaissement correspondant à chaque fois à la hauteur entre les rangées empilées les unes au-dessus des autres de piles d'articles (11), le panier d'empilage (12) peut être vidé successivement et couche par couche par l'unité pousseuse (17).

2. Machine pour thermoformage selon la revendication 1, **caractérisée en ce que** l'unité pousseuse (17) est conçue avec un nombre de tiges pousseuses (19) correspondant au nombre des piles d'articles (11) présentes dans une rangée.

3. Machine pour thermoformage selon la revendication 1 ou 2, **caractérisée en ce qu'**un dispositif transporteur (5) placé derrière le dispositif d'empilage et de comptage (4) transporte plus loin pas à pas selon une certaine cadence les piles d'articles (11) poussées.
